# FASCICULE DE BREVET EUROPEEN

(11) **EP 4 639 111 B1**
(45) Date de publication et mention de la délivrance du brevet: **11.11.2026**
(21) Numéro de dépôt: 23834102.8
(22) Date de dépôt: 18.12.2023
(51) Int. Cl.: G01J 3/02, G01J 3/443, G01N 21/71, G02B 5/00

(54) **DISPOSITIF D'ANALYSE D'UN ÉCHANTILLON MÉTALLIQUE PAR FAISCEAU LASER, COMPRENANT DES MOYENS DE MISE EN FORME DU FAISCEAU LASER**
VORRICHTUNG ZUR ANALYSE EINER METALLPROBE MITTELS EINES LASERSTRAHLS MIT MITTELN ZUR FORMUNG DES LASERSTRAHLS
DEVICE FOR ANALYZING A METAL SAMPLE USING A LASER BEAM, COMPRISING MEANS FOR SHAPING THE LASER BEAM

(30) Priorité: 20.12.2022 FR 2213975
(43) Date de publication de la demande: 29.10.2025
(73) Titulaire: Fariaut Instruments, 45100 Orleans (FR)
(72) Inventeur: FARIAUT, François, 45140 Saint Jean de la Ruelle (FR)
(74) Mandataire: Lequien, Philippe
(86) Numéro de dépôt international: PCT/EP2023/086494
(87) Numéro de publication internationale: WO 2024/133167

(56) Documents cités:
- EP-A1- 2 821 818
- WO-A1-03/006967
- WO-A1-2021/168111
- DE-T5- 112014 006 996
- FR-A- 1 065 244
- US-A1- 2017 067 779

## Description

La présente invention concerne le domaine de la cartographie et de l'analyse à haute résolution d'éléments dans des solides.

Plus particulièrement, l'invention concerne, en particulier mais non exclusivement, un dispositif d'analyse à haute résolution pour la cartographie d'éléments dans des solides métalliques.

L'invention peut notamment s'appliquer à l'analyse élémentaire de l'hydrogène et de l'oxygène par spectrométrie d'émission optique sur plasma produit par laser, dans le domaine de l'industrie nucléaire, ou encore de l'industrie aéronautique ou spatiale.

Dans des applications telles que la caractérisation de dispositifs soumis à des sources radioactives, ou encore la caractérisation de l'aptitude au vieillissement de dispositifs employés dans des environnements particulièrement sévères, par exemple dans des aéronefs ou des engins spatiaux, il peut s'avérer indispensable de procéder à l'analyse élémentaire d'échantillons métalliques.

Plus précisément, il peut s'avérer nécessaire de pouvoir dresser une cartographie de ces éléments au sein de l'échantillon analysé. Par cartographie, il est entendu une identification des éléments composant l'échantillon analysé et, éventuellement, la répartition et le lien entre les différents éléments.

Une telle analyse peut s'avérer particulièrement utile dans des études de fragilisation de métaux par l'hydrogène, ou bien dans des études de vieillissement de gaines de combustibles en présence d'oxygène, ou encore dans des études de fragilisation de gaines de combustibles causée par la formation d'hydrures, ces derniers favorisant la propagation de fissures.

Il existe diverses méthodes connues de cartographie d'éléments présents dans des échantillons.

L'une de ces méthodes est l'analyse élémentaire par « SEOPPL », acronyme de Spectrométrie d'Emission Optique sur Plasma Produit par Laser, technique qui se pratique en atmosphère naturelle.

Cette méthode s'applique notamment au contrôle et à la caractérisation in situ d'échantillons de pièces à analyser.

Un procédé d'analyse élémentaire par spectrométrie d'émission optique sur plasma produit par laser en présence d'argon est décrit par le document de brevet publié sous le numéro EP 0 654 663. Un dispositif d'analyse élémentaire est décrit dans le brevet WO 03/006967 A1.

Classiquement, un dispositif d'analyse comprend un bâti sur lequel sont montés :
- un module de génération d'un faisceau laser,
- un diaphragme de sélection d'une partie du faisceau laser émis par le module de génération,
- des moyens optiques de focalisation du faisceau laser sur un échantillon à étudier ;
- des moyens de collecte de l'émission optique, et,
- des moyens de détermination élémentaire de l'échantillon à étudier.

Une fois généré par le module de génération, le faisceau laser chemine jusqu'à atteindre l'échantillon à étudier.

Se crée alors un plasma au niveau de l'impact du faisceau laser sur l'échantillon à étudier, le plasma engendrant une émission optique à analyser pour cartographier les éléments composant l'échantillon étudié.

La collecte de l'émission optique du plasma est réalisée par les moyens de collecte, cette émission optique étant alors analysée par les moyens de détermination pour cartographier les éléments composant l'échantillon étudié.

Toutefois, l'interaction entre le laser et la matière de l'échantillon à étudier est directement liée à la géométrie du plasma et de l'ouverture du faisceau de focalisation.

Le faisceau de focalisation est la partie du faisceau laser situé entre la dernière lentille et l'échantillon.

Ce faisceau de focalisation présente une forme de cône allant en s'amincissant depuis la dernière lentille.

En situation d'analyse, plus l'ouverture du faisceau de focalisation est grande, et moins le plasma absorbe le faisceau, au bénéfice de l'ablation de la surface de l'échantillon par le faisceau laser, et donc au bénéfice de la qualité de l'analyse.

En d'autres termes, plus le cône est grand à sa base, et meilleure est l'interaction entre le faisceau et la matière de l'échantillon, donc meilleurs sont les résultats de l'analyse.

Au contraire, plus l'ouverture du faisceau de focalisation est petite, et plus le plasma absorbe le faisceau, au détriment de l'ablation de la surface de l'échantillon par le faisceau laser, et donc au détriment de la qualité de l'analyse.

En d'autres termes, moins le cône est grand à sa base, et moins bonne est l'interaction entre le faisceau et la matière de l'échantillon, donc moins bons sont les résultats de l'analyse.

Toutefois, l'augmentation de l'ouverture du faisceau de focalisation engendre la présence d'un cône central de faible ouverture, ce cône central grandissant en fonction de l'ouverture du faisceau de focalisation.

La présence de ce cône central de faible ouverture engendre alors une réduction de la qualité de l'analyse comme expliqué précédemment.

L'invention a notamment pour objectif de pallier les inconvénients de l'art antérieur.

Plus précisément, l'invention a pour objectif de proposer une solution permettant de générer un faisceau de grande ouverture améliorant la qualité de l'analyse comparativement aux solutions de l'art antérieur.

L'invention a également pour objectif de fournir une telle solution qui s'adapte à toutes les tailles de faisceaux de focalisation.

L'invention a en outre pour objectif de fournir une telle solution qui soit simple de mise en œuvre.

Ces objectifs, ainsi que d'autres qui apparaîtront par la suite, sont atteints grâce à l'invention qui a pour objet un dispositif d'analyse élémentaire d'un échantillon à étudier, le dispositif d'analyse comprenant un bâti sur lequel sont montés :
- un module de génération d'un faisceau laser,
- des moyens optiques de focalisation du faisceau laser sur un échantillon à étudier ;
- des moyens de collecte de l'émission optique, et
- des moyens de détermination élémentaire de l'échantillon à étudier,
caractérisé en ce que le dispositif d'analyse comprend également un module de mise en forme du faisceau laser intégrant au moins une lentille et un diaphragme de sélection d'une partie du faisceau laser émis par le module de génération, le diaphragme comprenant un corps pourvu d'une ouverture de sélection d'une partie d'un faisceau laser, caractérisé en ce que le diaphragme porte un élément impénétrable par des ondes du faisceau laser, positionné dans l'ouverture de sélection pour réduire à une forme annulaire l'ouverture de sélection.

L'utilisation d'un tel diaphragme permet d'obtenir, en sortie des moyens de focalisation, un rayonnement laser de focalisation dépourvu de cône central de faible ouverture.

Cela bénéficie alors directement à la qualité de l'ablation de l'échantillon par le rayonnement laser, ce qui favorise l'exploitation des résultats de l'ablation pour cartographier les éléments composants ledit échantillon.

En effet le diaphragme permet de masquer la portion centrale d'un faisceau laser. Dès lors, lorsqu'un faisceau laser est destiné à devenir un faisceau ouvert en sortie des moyens optiques de focalisation, il est alors dépourvu de cône central qui dégrade les propriétés dudit faisceau laser.

Selon un aspect avantageux, l'élément impénétrable présente une forme complémentaire à la forme de l'ouverture de sélection.

Une telle complémentarité de forme permet d'obtenir un faisceau laser de forme tubulaire dont le contour externe de la section masquée correspond au contour externe de l'ouverture de sélection du diaphragme.

Cela permet de conserver une homogénéité du faisceau laser et, lorsque le faisceau laser est utilisé pour l'ablation d'un échantillon, de conserver une forme homogène de l'ablation, ce qui en facilite son analyse par un technicien.

Selon un autre aspect avantageux, l'élément impénétrable est relié au corps par au moins un bras de maintien.

Cela permet de conserver la position de l'élément impénétrable en toutes circonstances, notamment lorsque le diaphragme est déplacé d'une position à une autre.

En d'autres termes, lorsque le diaphragme est déplacé, il n'est pas nécessaire de repo-sitionner l'élément impénétrable par rapport à l'ouverture de sélection, seule la position du diaphragme par rapport au module de génération laser est à régler.

Selon un autre aspect avantageux, l'élément impénétrable est venu de matière avec le corps.

Dans ce cas, le diaphragme peut par exemple être réalisé par extrusion de matière, découpe d'un brut (c'est-à-dire usinage d'une ébauche ou d'un morceau de matière débité)

En outre, cela garantit que l'élément impénétrable conserve sa position par rapport à l'ouverture de sélection.

Selon un autre aspect avantageux, l'élément impénétrable est solidaire d'un film.

Le fait de positionner l'élément impénétrable sur un film autorise le changement de forme et/ou de taille de l'élément impénétrable. En effet, il suffit alors de changer le film pour modifier la forme du faisceau sortant du diaphragme, en fonction du besoin.

Selon un autre aspect avantageux, le film est transparent aux ondes d'un faisceau laser pour lequel le diaphragme est sélectionné.

Le film ne forme ainsi aucune gêne au passage du rayonnement laser, ce qui limite les risques de dégradation de la qualité du rayonnement laser.

L'invention concerne, en outre, un procédé d'analyse élémentaire d'un échantillon à étudier au moyen d'un dispositif d'analyse tel que précédemment décrit, le procédé comprenant les étapes consistant à :
- générer un faisceau laser via le module de génération,
- focaliser le faisceau laser via les moyens optiques de focalisation pour obtenir un faisceau de focalisation, et
- déterminer une composition élémentaire de l'échantillon à étudier via les moyens de collecte et les moyens de détermination,
dans lequel, l'étape consistant à focaliser le faisceau laser comprend une sous-étape consistant à masquer un cône central dans le faisceau de focalisation, via le diaphragme.

Ce procédé permet de garantir l'obtention d'un faisceau de focalisation, c'est-à-dire d'un faisceau sortant des moyens de focalisation, qui soit dépourvu de cône central de faible ouverture.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés décrits ci-après.
[Fig.1] La [Fig.1] est une représentation schématique d'un système d'analyse comprenant un dispositif d'analyse selon l'invention.
[Fig.2] La [Fig.2] est une représentation schématique de détail d'un faisceau de focalisation obtenu par des moyens optiques de focalisation du dispositif d'analyse selon l'invention.
[Fig.3] La [Fig.3] est une représentation schématique en perspective d'un diaphragme du dispositif d'analyse selon l'invention, selon un premier mode de réalisation.
[Fig.4] La [Fig.4] est une représentation schématique en perspective d'un diaphragme du dispositif d'analyse selon l'invention, selon un deuxième mode de réalisation.

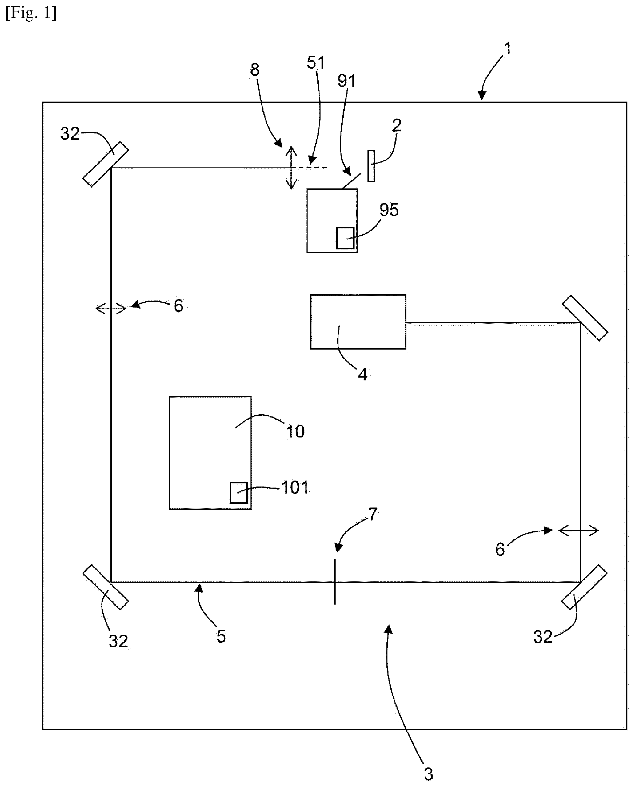

La [Fig.1] illustre un système 1 d'analyse élémentaire d'un échantillon 2 à étudier.

Le système 1 inclut un dispositif d'analyse 3 tel que décrit ci-après, ce dispositif d'analyse 3 comprenant un socle 31 de réception de l'échantillon 2.

Le dispositif d'analyse 3 comprend également un bâti sur lequel sont montés :
- un module de génération 4 d'un faisceau laser 5,
- un module de mise en forme du faisceau laser 5 intégrant au moins une lentille 6 et un diaphragme de sélection 7 d'une partie du faisceau laser 5 émis par le module de génération 4,
- des moyens optiques de focalisation 8 du faisceau laser 5 sur l'échantillon 2 à étudier.

Tel que cela est illustré par la [Fig.1], le dispositif d'analyse 3 comprend, selon le sens d'émission du faisceau laser 5 depuis le module de génération 4 vers l'échantillon 4, une pluralité de lentilles 6 et un diaphragme 7.

Le dispositif d'analyse 3 comprend également une pluralité de miroirs 32 permettant de dévier le faisceau laser 5 depuis le module de génération 4 jusqu'aux moyens de focalisation 8, cela afin de limiter l'encombrement du dispositif d'analyse 3.

En sortie des moyens optiques de focalisation 8, le faisceau laser 5 devient un faisceau de focalisation 51. Dans ce cas, le faisceau de focalisation 51 présente une forme conique allant en s'amincissant en direction de l'échantillon 2, tandis qu'entre le module de génération 4 et les moyens de focalisation 8, le faisceau laser 5 présente une forme sensiblement cylindrique.

En outre, le système 1 comprend des moyens de collecte 9 et des moyens de détermination 10 dont le rôle sera décrit ci-après.

Comme décrit précédemment, le système 1 permet d'analyser un échantillon 2 pour en cartographier sa composition élémentaire.

A cet effet, le faisceau laser 5 est émis par le module de génération 4 pour être dirigé vers l'échantillon 2 pour en impacter sa surface.

Lorsque le faisceau laser 5 impacte l'échantillon 2 à étudier, un plasma P se crée, engendrant une émission optique à analyser pour cartographier les éléments composant l'échantillon 2.

La collecte de l'émission optique du plasma est réalisée par les moyens de collecte 9.

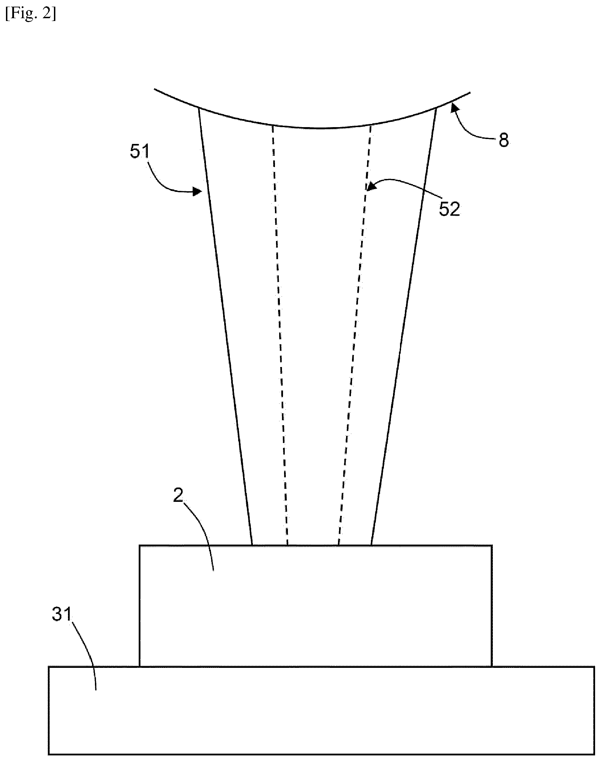

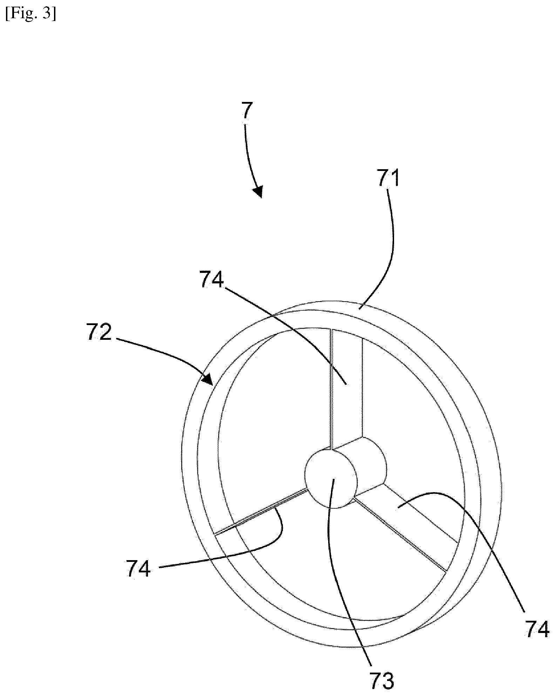

Pour cela, tel que cela est illustré par les figures 2 et 3, les moyens de collecte 9 comprennent une fibre optique 91 dont une extrémité libre définissant une portion terminale est approchée au plus près du plasma P.

Les moyens de collecte 9 comprennent également des premiers moyens de communication 95 destinés à établir une voie de communication avec des deuxièmes moyens de communication 101 des moyens de détermination 10.

Les premiers moyens de communication 95 et les deuxièmes moyens de communication 101 peuvent être du type sans fils. En variante, les premiers moyens de communication 95 et les deuxièmes moyens de communication 101 peuvent se présenter sous la forme de connecteurs destinés à recevoir la fiche d'un câble de liaison filaire.

Le faisceau de focalisation 51 peut présenter une grande ouverture ou une faible ouverture.

Plus spécifiquement, le faisceau de focalisation 51 présente une forme de cône allant en s'amincissant depuis la dernière lentille, c'est-à-dire depuis les moyens optiques de focalisation 8. Comme illustré par la [Fig.2], le faisceau de focalisation 51 présente une forme tronconique entre les moyens optiques de focalisation 8 et l'échantillon 2. Cette forme tronconique est due au fait que l'échantillon 2 est positionné à une distance prédéterminée des moyens optiques de focalisation 8 de sorte que la section du faisceau de focalisation 51 soit plus grande qu'un simple point formé par l'extrémité de la forme conique du faisceau de focalisation. En d'autres termes, la distance entre les moyens optiques de focalisation 8 et l'échantillon 2 est strictement inférieure à une hauteur du cône formé par le faisceau de focalisation 51, étant rappelé qu'une hauteur de cône est mesurée entre la base et le sommet du cône.

En situation d'analyse, plus l'ouverture du faisceau de focalisation 51 est grande, et moins le plasma P absorbe le faisceau 5, au bénéfice de l'ablation de la surface de l'échantillon 2 par le faisceau laser 5, et donc au bénéfice de la qualité de l'analyse.

En d'autres termes, plus le cône est grand à sa base, et meilleure est l'interaction entre le faisceau 5 et la matière de l'échantillon 2, donc meilleurs sont les résultats de l'analyse.

Au contraire, plus l'ouverture du faisceau de focalisation 51 est petite, et plus le plasma P absorbe le faisceau, au détriment de l'ablation de la surface de l'échantillon 2 par le faisceau laser 5, et donc au détriment de la qualité de l'analyse.

En d'autres termes, moins le cône est grand à sa base, et moins bonne est l'interaction entre le faisceau 5 et la matière de l'échantillon 2, donc moins bons sont les résultats de l'analyse.

Toutefois, comme illustré par la [Fig.2], l'augmentation de l'ouverture du faisceau de focalisation 51 engendre la présence d'un cône central 52 de faible ouverture, ce cône central grandissant en fonction de l'ouverture du faisceau de focalisation 51.

La présence de ce cône central 52 de faible ouverture engendre alors une réduction de la qualité de l'analyse comme expliqué précédemment.

Le diaphragme 7 du module de mise en forme du faisceau laser 5 est conçu spécialement pour supprimer ce cône central 52, ou à tout le moins pour le limiter.

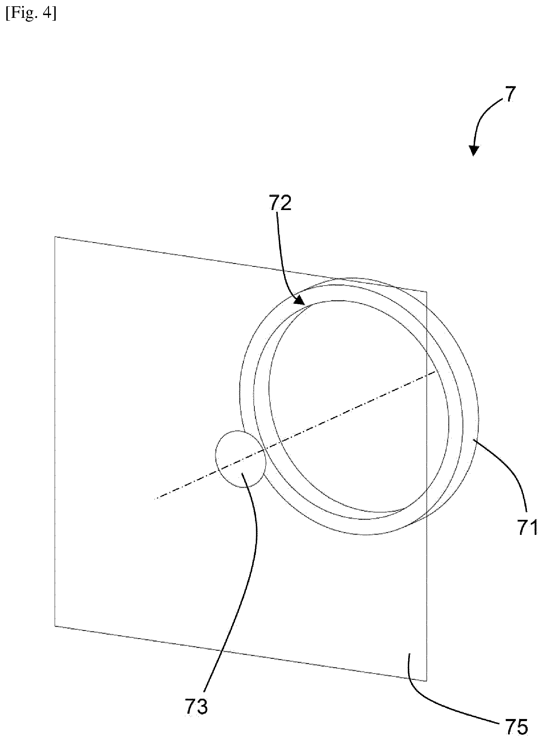

Plus spécifiquement, en référence aux figures 3 et 4, le diaphragme 7 comprend un corps 71 pourvu d'une ouverture de sélection 72.

Lorsque le faisceau laser 5 traverse le diaphragme 7, une partie de sa section est alors bloquée par le corps 71 du diaphragme 7 de sorte que seule la partie située en regard de l'ouverture de sélection 72 puisse traverser le diaphragme 7.

En outre, le diaphragme 7 porte un élément impénétrable 73 aux ondes du faisceau laser 5.

Cet élément impénétrable 73 est positionné dans l'ouverture de sélection 72 comme cela est illustré par les figures 3 et 4.

L'élément impénétrable 73 forme alors une barrière aux ondes du faisceau laser 5, et donc réduit à une forme annulaire l'ouverture de sélection 72.

Le faisceau laser 5 ressortant du diaphragme 7 présente alors une forme tubulaire contrairement à une forme cylindrique pleine avant d'atteindre le diaphragme 7.

Sur les figures 3 et 4, le corps 71 du diaphragme 7 présente une longueur sensiblement égale à sa largeur (ici son diamètre puisqu'il est représenté à section circulaire) et est donc sensiblement cylindrique. En variante, le diaphragme 7 pourrait présenter une faible longueur de sorte qu'il prenne une forme sensiblement annulaire.

Selon un premier mode de réalisation illustré par la [Fig.3], l'élément impénétrable 73 est relié au corps 71 par l'intermédiaire d'au moins un bras 74 de maintien.

Selon le mode particulier de réalisation de la [Fig.3], le diaphragme 7 comprend trois bras 74 régulièrement écartés les uns des autres. Plus spécifiquement, chaque bras 74 est écarté d'un angle de 120° par rapport aux autres bras 74.

Les bras 74 et l'élément impénétrable 73 peuvent être venus de matière avec le corps 71. En d'autres termes, les bras 74 et l'élément impénétrable 73 sont réalisés dans le même matériau que le corps 71 de sorte que le diaphragme 7 est par exemple obtenu par usinage ou découpage d'un bloc de matière, ou directement issu d'un moulage.

Selon d'autres variantes de réalisation, le diaphragme pourrait comporter seulement deux bras 74 ou, au contraire, plus de trois bras 74.

Selon un deuxième mode de réalisation illustré par la [Fig.4], l'élément impénétrable 73 est solidaire d'un film 75.

Le film 75 est alors rapporté sur le corps 71 du diaphragme 7 et y est maintenu par des moyens ad hoc.

Le film 75 est avantageusement perméable aux ondes du faisceau laser 5.

Autrement dit, le film 5 est transparent aux ondes du faisceau laser 5 pour lequel le diaphragme 7 est sélectionné.

En variante, le film 75 peut être indépendant du corps 71 en étant par exemple mont sur un support positionné devant le corps 71 du diaphragme 7.

Cela permet de conserver toute la puissance et tout le spectre du faisceau laser 5 traversant le diaphragme 7.

L'analyse d'un échantillon 2 au moyen du dispositif d'analyse 3, tel qu'il vient d'être décrit, est réalisée au moyen d'un procédé comprenant les étapes consistant à :
- générer un faisceau laser 5 via le module de génération 4,
- focaliser le faisceau laser 5 via les moyens optiques 8 pour obtenir un faisceau de focalisation 51, et
- déterminer une composition élémentaire de l'échantillon 2 à étudier via les moyens de collecte 9 et les moyens de détermination 10.

Selon l'invention, l'étape consistant à focaliser le faisceau laser 5 comprend une sous-étape consistant à masquer un cône central 52 dans le faisceau de focalisation 51, via le diaphragme 7.

Le masquage du cône central 52 est réalisé, comme décrit précédemment, par l'élément impénétrable 73.

## Revendications

1. Dispositif d'analyse (3) élémentaire d'un échantillon (2) à étudier, le dispositif d'analyse (3) comprenant un bâti sur lequel sont montés :
- un module de génération (4) d'un faisceau laser (5),
- des moyens optiques de focalisation (8) du faisceau laser (5) sur un échantillon (2) à étudier ;
- des moyens de collecte (9) de l'émission optique, et
- des moyens de détermination (10) élémentaire de l'échantillon (2) à étudier,
**caractérisé en ce que** le dispositif d'analyse (3) comprend également un module de mise en forme du faisceau laser (5) intégrant au moins une lentille (6) et un diaphragme (7) de sélection d'une partie du faisceau laser (5) émis par le module de génération (4), le diaphragme (7) comprenant un corps (71) pourvu d'une ouverture de sélection (72) d'une partie d'un faisceau laser (5), le diaphragme (7) étant couplé à un élément impénétrable (73) par des ondes du faisceau laser (5), positionné dans l'ouverture de sélection (72) pour réduire à une forme annulaire l'ouverture de sélection (72).

2. Dispositif d'analyse (3) selon la revendication précédente, **caractérisé en ce que** l'élément impénétrable (73) présente une forme complémentaire à la forme de l'ouverture de sélection (72).

3. Dispositif d'analyse (3) selon l'une quelconque des revendications précédentes, **caractérisé en ce que** l'élément impénétrable (73) est relié au corps (71) par au moins un bras (74) de maintien.

4. Dispositif d'analyse (3) selon la revendication précédente, **caractérisé en ce que** l'élément impénétrable (73) est venu de matière avec le corps (71).

5. Dispositif d'analyse (3) selon la revendication 1 ou 2, **caractérisé en ce que** l'élément impénétrable (73) est solidaire d'un film (75).

6. Dispositif d'analyse (3) selon la revendication précédente, **caractérisé en ce que** le film (75) est transparent aux ondes d'un faisceau laser (5) pour lequel le diaphragme (7) est sélectionné.

7. Procédé d'analyse élémentaire d'un échantillon (2) à étudier au moyen d'un dispositif d'analyse (3) selon l'une quelconque des revendications précédentes, le procédé comprenant les étapes consistant à :
- générer un faisceau laser (5) via le module de génération (4),
- focaliser le faisceau laser (5) via les moyens optiques de focalisation (8) pour obtenir un faisceau de focalisation (51), et
- déterminer une composition élémentaire de l'échantillon (2) à étudier via les moyens de collecte (9) et les moyens de détermination (10),
dans lequel, l'étape consistant à focaliser le faisceau laser (5) comprend une sous-étape consistant à masquer un cône central (52) dans le faisceau de focalisation (51), via le diaphragme (7).

## Patentansprüche

1. Vorrichtung (3) zur elementaren Analyse einer zu untersuchenden Probe (2), wobei die Analysevorrichtung (3) ein Gestell umfasst, an dem Folgendes montiert ist:
- ein Modul (4) zur Erzeugung eines Laserstrahls (5),
- optische Mittel zur Fokussierung (8) des Laserstrahls (5) auf eine zu untersuchende Probe (2);
- Mittel zum Sammeln (9) der optischen Emission, und
- Mittel zum elementaren Bestimmen (10) der zu untersuchenden Probe (2),
**dadurch gekennzeichnet, dass** die Analysevorrichtung (3) auch ein Laserstrahlformungsmodul (5) umfasst, in das mindestens eine Linse (6) und eine Blende (7) zur Auswahl eines Teils des von dem Erzeugungsmodul (4) emittierten Laserstrahls (5) integriert sind, wobei die Blende (7) einen Körper (71) umfasst, der mit einer Auswahlöffnung (72) für einen Teil eines Laserstrahls (5) versehen ist, wobei die Blende (7) mit einem durch die Wellen des Laserstrahls (5) undurchdringlichen Element (73) gekoppelt ist, das in der Auswahlöffnung (72) positioniert ist, um die Auswahlöffnung (72) auf eine ringförmige Form zu reduzieren.

2. Analysevorrichtung (3) nach dem vorhergehenden Anspruch, **dadurch gekennzeichnet, dass** das undurchdringliche Element (73) eine Form aufweist, die die Form der Auswahlöffnung (72) ergänzt.

3. Analysevorrichtung (3) nach einem der vorhergehenden Ansprüche, **dadurch gekennzeichnet, dass** das undurchdringliche Element (73) mit dem Körper (71) durch mindestens einen Haltearm (74) verbunden ist.

4. Analysevorrichtung (3) nach dem vorhergehenden Anspruch, **dadurch gekennzeichnet, dass** das undurchdringliche Element (73) einstückig mit dem Körper (71) ist.

5. Analysevorrichtung (3) nach Anspruch 1 oder 2, **dadurch gekennzeichnet, dass** das undurchdringliche Element (73) fest mit einer Folie (75) verbunden ist.

6. Analysevorrichtung (3) nach dem vorhergehenden Anspruch, **dadurch gekennzeichnet, dass** die Folie (75) für die Wellen eines Laserstrahls (5) transparent ist, für den die Blende (7) ausgewählt ist.

7. Verfahren zur elementaren Analyse einer zu untersuchenden Probe (2) mittels einer Analysevorrichtung (3) nach einem der vorhergehenden Ansprüche, wobei das Verfahren die folgenden Schritte umfasst:
- Erzeugen eines Laserstrahls (5) über das Erzeugungsmodul (4),
- Fokussieren des Laserstrahls (5) über die optischen Mittel zur Fokussierung (8), um einen Fokussierstrahl (51) zu erhalten, und
- Bestimmen einer elementaren Zusammensetzung der zu untersuchenden Probe (2) über die Sammelmittel (9) und die Bestimmungsmittel (10),
wobei der Schritt, der darin besteht, den Laserstrahl (5) zu fokussieren, einen Unterschritt umfasst, der darin besteht, einen zentralen Kegel (52) im Fokussierstrahl (51) mittels der Blende (7) zu verdecken.

## Claims

1. Elementary analysis device (3) of a sample (2) to be studied, the analysis device (3) comprising a frame on which are mounted:
- a module (4) for generating a laser beam (5),
- optical means (8) for focusing the laser beam (5) on a sample (2) to be studied;
- means (9) for collecting the optical emission, and
- means (10) for elementary determination of the sample (2) to be studied,
**characterised in that** the analysis device (3) also comprises a module for shaping the laser beam (5) integrating at least one lens (6) and a diaphragm (7) for selecting a portion of the laser beam (5) emitted by the generation module (4), the diaphragm (7) comprising a body (71) provided with a selection opening (72) of a portion of a laser beam (5), the diaphragm (7) being coupled with an impenetrable element (73) by waves of the laser beam (5), positioned in the selection opening (72) in order to reduce the selection opening (72) to an annular shape.

2. Analysis device (3) according to the preceding claim, **characterised in that** the impenetrable element (73) has a shape complementary with the shape of the selection opening (72).

3. Analysis device (3) according to any one of the preceding claims, **characterised in that** the impenetrable element (73) is connected to the body (71) by at least one holding arm (74).

4. Analysis device (3) according to the preceding claim, **characterised in that** the impenetrable element (73) is made in one-piece with the body (71).

5. Analysis device (3) according to claim 1 or 2, **characterised in that** the impenetrable element (73) is secured to a film (75).

6. Analysis device (3) according to the preceding claim, **characterised in that** the film (75) is transparent to the waves of a laser beam (5) for which the diaphragm (7) is selected.

7. Method for elementary analysis of a sample (2) to be studied by means of an analysis device (3) according to any one of the preceding claims, the method comprising the steps of:
- generating a laser beam (5) via the generation module (4),
- focusing the laser beam (5) via the optical focusing means (8) in order to obtain a focusing beam (51), and
- determining an elementary composition of the sample (2) to be studied via the collection means (9) and the determination means (10),
wherein the step of focusing the laser beam (5) comprises a sub-step of masking a central cone (52) in the focusing beam (51), via the diaphragm (7).
